# EUROPEAN PATENT SPECIFICATION

(11) **EP 0 549 075 B1**
(45) Date of publication and mention of the grant of the patent: **04.02.1998**
(21) Application number: 92204049.8
(22) Date of filing: 22.12.1992
(51) Int. Cl.: A01B 33/08

(54) **An agricultural machine**
Landwirtschaftliche Maschine
Machine agricole

(30) Priority: 23.12.1991 NL 9102164
(43) Date of publication of application: 30.06.1993
(60) Divisional application: 97201523.4
(73) Proprietor: C. van der Lely N.V., NL-3155 PD Maasland (NL)
(72) Inventor: van der Lely, Cornelis, CH-6300 Zug (CH)
(74) Representative: Mulder, Herman

(56) References cited:
- FR-A- 2 407 652
- GB-A- 1 226 679
- GB-A- 1 413 672
- NL-A- 7 613 259
- NL-A- 9 000 990

## Description

The present invention relates to an agricultural machine, as described in the preamble of claim 1.

A suchlike machine is known from the French Patent Application FR-A-2407652.

In this prior art machine, one of the two bearing housings of a working member is connected to the bottom side of the hollow frame beam gear box, which gear box, as usual, is made of plate material. The other bearing housing is mounted to a carrier which extends between and is connected with the leading and trailing upstanding walls of the hollow frame beam. The construction has for a disadvantage that the walls of the gear box may become overloaded and that the two bearing housings may, due to the flexible character of the bearing housing and the forces acting on the active part of a soil working member, to some extent dislocate relative to each other. The axis supported by the bearing housings may thereby be forced away from its favourable orientation relative to said housings, so that these may eventually break or at least wear out quickly. The present invention has for its object to prevent suchlike effects, at least to come to an attractive alternative in this respect.

It is remarked that the Dutch Patent Application NL-A-90 00990 discloses a prior art machine, comprising a cast iron bearing housing which forms a part of the gear box of the machine and which is adapted to keep the machine's lubricant. The gear box is built up by a plurality of such housings which are held together by four tensile rods extending over the entire width of the machine. The bearing housing known from this machine comprises an upper and a lower part, which parts are interconnected by upwardly directed clamping means. The machine has the disadvantages of relatively heavy weight and relatively difficult maintenance. When the upper tensile rods are loosened for taking away one or more upper bearing housing parts, e.g. for the replacement of a bearing, the machine is brought into a fragile state and also lubricant may leak between the planes of contact of the lower housing parts.

According to the invention, a favourably construction, at least partly overcoming the above disadvantages, is achieved by a construction with the characterising features of claim 1. Such a construction has the effect that no dislocation or twisting of bearing housings relative to each other is possible.

In accordance with a still further special feature of the invention, a spacer member attached to the bearing housing is clamped by means of a bolt between two facing outer walls. Such a construction has for its advantage that parts of the bearing housing cannot move relative to each other and consequently can provide a robust construction for the support of the shaft of a working member.

In accordance with a still further special feature of the invention, a bottom end of the bearing housing is inserted through the wall of the gear box, which bottom end is provided remote from this bottom end with a circular edge which is applied on the working member and substantially extends to the wall of the gear box. Such a construction renders it possible to create in advantageous locations a bearing-supported support for the shaft of a working member, whilst the vulnerability of this construction is advantageously reduced.

In accordance with a special embodiment of the invention, a working member comprises a rotatable carrier having at least one, partly downwardly extending, spring-steel holder, to which holder a tine or knife is connectable. Such a construction has the advantage that the bearing housing is advantageously relieved from any shocks during operation, whilst in addition a simple construction can be obtained, since the shocks are absorbed by a more or less elastic intermediate element. In addition to the operating life of the supporting construction for a working member, also the expected tool life of a tine is advantageously influenced thereby.

In accordance with a still further special feature of the invention, a shaft associated with the working member is welded to a gear wheel located between two bearings, the knife or tine holder being connectable to the shaft via splines. Such a construction renders inter alia a simple manufacture possible and results in a long operating life of the machine.

In accordance with further features of the invention, the machine includes, arranged transversely to the direction of operative travel, a plurality of gearwheels and the machine is a soil cultivating machine, more specifically a rotary harrow or, put differently, a p.t.o.-driven rotary harrow. The gearwheels thereof are spur gears and are rotatable about upwardly directed shafts. Also in accordance with the invention, spaced-apart walls of the gear box are interconnected by one or a plurality of bolts. According to the invention, it is possible that spacer members are located between the upper and lower wall. A bolt is then inserted through a hole in a spacer member. According to the invention, the bearing housing is formed such that, in a plan view, it has at least one protruding point, through which a bolt is inserted. More specifically, a bearing housing has four protruding points so that it is in the shape of a star.

In accordance with a still further feature of the invention, bolts, which extend through the lower wall and through the upper wall, are provided along the periphery of a gearwheel. The bearing housings in the gear box are substantially contiguous. Alternatively, the tines of a working member can, in accordance with the invention, be connected with the aid of one or more leaf springs. Then a holder for the tine, or a tine itself can be connected via at least one pin to a carrier.

In accordance with a still further feature of the invention, the leading edge of a knife-like tine has, in a side view, a recessed portion. Also in accordance with the invention, an edge of a tine carrier, together with the lower end of a bearing housing, encompasses a substantially closed space. Additionally, in accordance with the invention, it is possible that an oil seal downwardly discharges oil fed to above a gearwheel.

For a better understanding of the invention and to show how the same may be carried into effect, reference will now be made by way of example to the accompanying drawings, in which:
Figure 1 is a plan view of an agricultural machine, more specifically a p.t.o.-driven rotary harrow, in which the invention is applied;
Figure 2 shows a first embodiment and is a cross-sectional view taken on the line II-II in Figure 1;
Figure 3 is a first alternative embodiment of a detail of the cross-sectional view of Figure 2;
Figure 4 is a second alternative embodiment of a detail of the cross-sectional view of Figure 2;
Figure 5 is a plan view of the lower portion of the bearing housing shown in Figure 2;
Figure 6 is a cross-sectional view taken on the line VI-VI of Figure 5;
Figure 7 is a cross-sectional view taken on the line VII-VII in Figure 5;
Figure 8 is a plan view of the bearing housing shown in Figure 2;
Figure 9 is a cross-sectional view taken on the line IX-IX in Figure 8;
Figure 10 is a second embodiment of the invention and is a cross-sectional view taken on the line II-II in Figure 1;
Figure 11 is a third embodiment of the invention and is a cross-sectional view taken on the line II-II in Figure 1;
Figure 12 is a plan view of a portion of the bearing housing shown in Figure 10;
Figure 13 is a side view taken in the direction of the arrow XIII in Figure 11;
Figure 14 is a bottom view taken on the line XIV-XIV in Figure 13, and
Figure 15 is a side view of a specific tine shape, forming part of the invention.

Corresponding component parts in the drawings are given the same reference numerals.

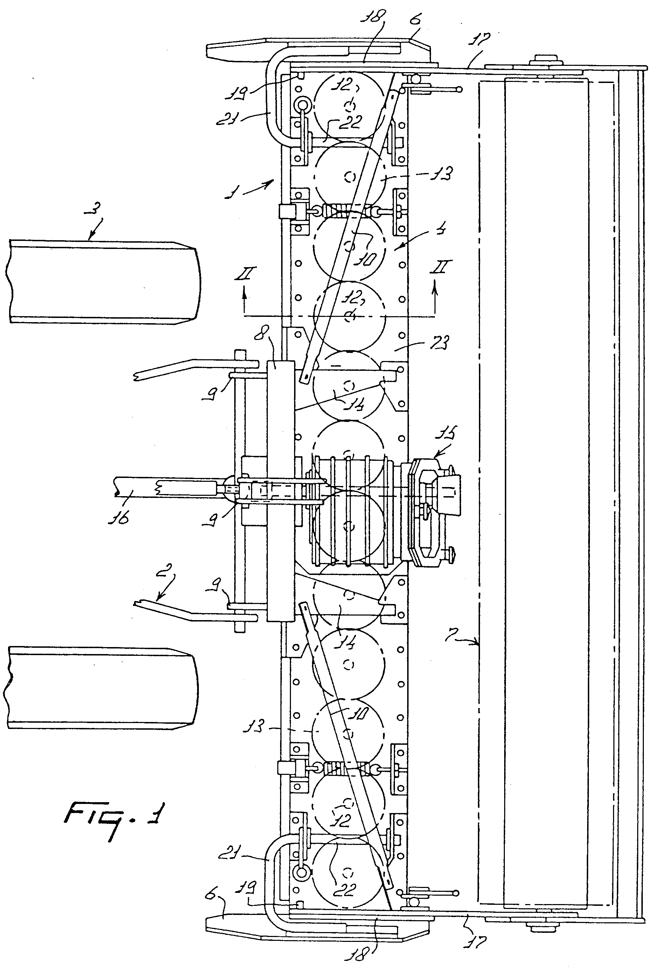

The agricultural machine 1 in Figure 1 is a p.t.o.-driven rotary harrow in the state in which it is coupled to the three-point lifting hitch 2 of a tractor 3. The rotary harrow 1 has a hollow frame beam 4 which supports working members 5 or, put differently, soil cultivating members 5, the frame beam 4 being provided at its ends with side plates 6 and at its rear side with a roller 7. In its midway point, the frame beam is provided at its upper side with a trestle 8 having coupling beams 9 for coupling the harrow to the three-point lifting hitch of a tractor. On either side, the trestle 8 is connected to the end of the frame beam 4 via a strut 10, so that the trestle 8, the struts 10 and the frame beam 4 form a solid framework. The working members 5, in the present example soil cultivating members which are located for a large part beyond the bottom side of the frame beam 4, are each rotatable about a shaft 12 which is bearing-supported relative to the frame beam 4. A gearwheel 15 is attached to that portion of this shaft that extends to inside the frame beam 4. Therefore, the hollow frame beam 4 is alternatively denoted gear box 4. The gear-wheels 13 of the soil cultivating members 5 are in mesh in the gear box 4. In the embodiment shown in Figure 1, the p.t.o.-driven rotary harrow has a width of three metres and is fitted with twelve gearwheels 13 arranged transversely to the direction of operative travel.

A transmission box 15 is positioned between the legs 14 of the trestle 8 at the upper side of the frame beam 4. This box is in connection through an aperture in the gear box 4 with the extension of the shaft 12 of one of the middlemost two soil cultivating members 5. At the leading side, the gear box 15 is connected to the power take-off shaft of the tractor 3 via a coupling shaft 16. The driving motion thereof is transferred in the transmission box 15 via a right-angle gearwheel transmission to the shaft 12, which is bearing-supported in the frame beam 4, of the working members 5. The roller 7 at the rear side of the frame beam 4 is connected to the box 4 via a pair of arms 17. The connection is constituted by a stub axle 19 which is provided at the leading and upper side of the frame beam 4 against an end plate 18 and about which the arms 17 can pivot. The end plate 18 which closes the ends of the frame beam 4 is arranged such that it extends in the vertical direction and above the frame beam 4, so that a guide means for the possible motions of the arms 17 of the roller 8 is created. The side plates 6 alternatively denoted "soil guide plates", are pivotal by means of an arm 21 relative to the pivot shaft 22 positioned at the upper side of the frame beam 4.

Figure 2, which is a partly cross-sectional view through the frame beam 4 and the soil cultivating members 5, shows at the bottom side a soil cultivating member 5 formed by tines 24 which via bolts 25 and with the aid of recessed portions, which fit over a projection 26 of a tine carrier 27, are connected to a tine carrier 17. The head of the bolt 25 is of the hexagon-socket type, so that the edges of application of tools cannot wear off. A further protection against wear by friction with the soil is obtained by a bulging portion 28 of the tine 24, which bulging portion 28 encompasses the bolt head at least at the bottom side and the leading and rear sides. The associated nut is protected by means of a cup-shaped envelope 29, which is pushed over the bolt through a bore in the bottom of the sleeve and is clamped tight by the nut. The tine carrier 27 is disposed on the lower end of the shaft 12 by means of key ways, alternatively denoted "splines". The carrier 27 is supported with the aid of a ring 31 and a lock nut 21 provided over the reduced threaded end of the shaft 12.

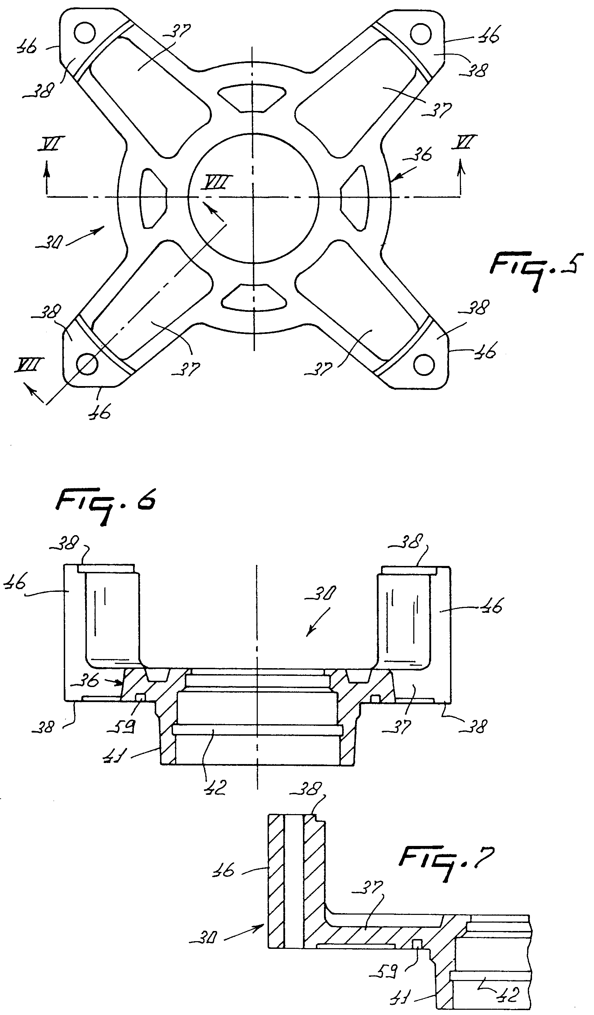

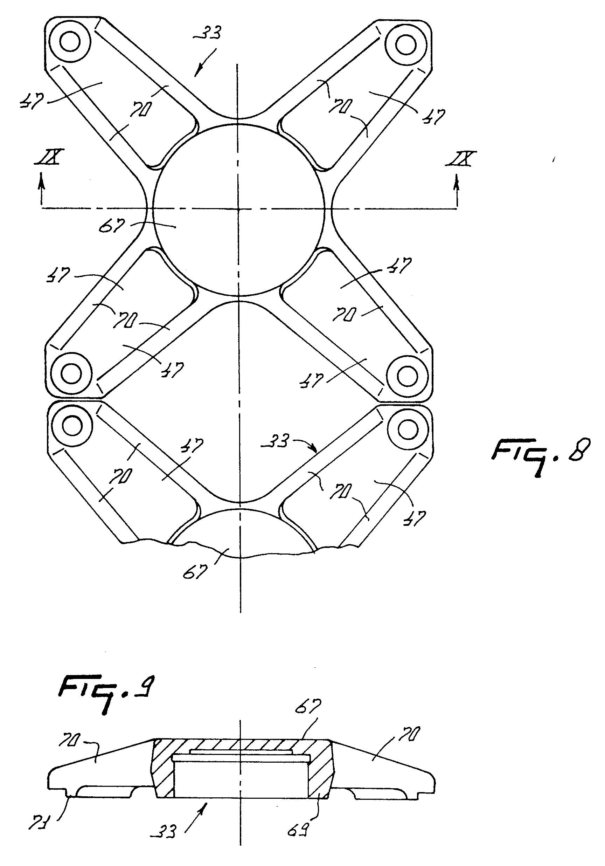

The shaft 12 itself is supported via a bearing 34 by a bearing housing 35 in the frame beam 4. The bearing housing consists of a lower part 30 and an upper part 33. The parts are removable from each other in the axial direction. As is shown in Figures 5 and 8, the bearing housing 35 comprises, positioned around and near, respectively, the shaft a circular central portion 36 and 67, respectively, to which four radiating points 37, 47 are attached in the form of a star. The lower bearing housing 30 bears with its central portion 36 and with contact planes 38 at the ends of radiating points 37 on the bottom plate 39 of the trough-shaped frame beam 4. The first part 36 of the bearing housing 35 is provided with a boss-like lower end 41 which at some distance protrudes about the shaft 12 through the bottom plate 39 of the gear box 4. The protruding portion of the bearing housing 35 is provided at some distance below the bottom plate 39 of the gear box 4 with a nick 42, in which two locking washers 43 are located. The outer ring of the bearing 34, the central portion of which is arranged at the level of the bottom plate 39 of the gear box 4, bears on these washers 43.

A collar surface of the relevant gearwheel 13 bears on the inner ring of the bearing 34 via a spacer ring 44 which tightly fits around the shaft. This gearwheel 13 is fused to the shaft 12 via welded seams. As a result thereof, in addition to the gearwheel 13, also the shaft 12 and the soil cultivating member 5 ultimately bear on the bearing 34. The protruding portions of the lower bearing housing part 30 extend just beyond the periphery of a gearwheel 13 in the upward direction and reaches to a small distance above a gearwheel 13. The second part 33 of the bearing housing bears on the upper end of the upwardly directed portion 46 of the protruding portions 37, also via protruding portions 47. The second part 33 of the bearing housing supports the end of the shaft 12 via a second bearing 48. In this situation, the second bearing is arranged about a reduced portion 49 of the shaft 12. The second part 33 of the bearing housing is connected to the first part 30 and to the bottom 39 of the gear box 4 by means of a bolt 50, which is passed from the bottom side of the gear box through holes in the bottom plate 39, the upright portion 46 of a protrusion 37 and through a protruding portion 47 of the second part 33 of the bearing housing. The bolt head located outside the box 4 is protected by means of a cup-shaped envelope 52 in a manner already described hereinbefore from wear by the flow of earth created under the gear box during operation. The cup-shaped envelopes 52 are in this case also applied to increase the stiffness of the bottom plate 39. Because of the distance of the bolt 50 relative to the bore of the box 4 for the shaft 12, or by the length of a protruding portion 37, a wall of the gear box is loaded to a relatively small extent. An additional advantageous fact is that the planes of contact 38 of the bearing housings are outside the periphery of a gearwheel.

Provided at the bottom side of the inner ring of the lower bearing 34 at the upper side of the carrier 27 of the soil cultivating member 5 are a spacer ring 53 and a protective washer 54 about the shaft 12. The locking nut 32 at the bottom side of the shaft 12 can be tightened such that the tine carrier 27, the protective washer 54, the lower spacer ring 53, the first bearing 34 and the upper spacer ring 44 around the shaft 12 are clamped between the gearwheel 13 and the locking nut 32.

Near the periphery of the shaft 12, the carrier 27 is provided with an upright edge 56, around which the protective washer 54 bears on the carrier 27. The height of this edge 56 is less than the height of the protective washer 54 which in situ is provided with a thickened portion which extends in the radial direction to as far as the inner edge of the boss 41 of the bearing housing 35, which boss passes through said box. The thickness of the lower spacer ring 53 exceeds the thickness of the upright edge 56 on the carrier 27, so that the spacer ring 53 bears on the inner edge 57 of the protective washer 54. The upper outer edge of this spacer ring 53 is bevelled, so that the width of the plane on which the inner ring of the bearing 34 bears is at least not larger than the width of the inner ring of the bearing 34. This reduces the risk of contact of the lower spacer ring with a rotary portion of the bearing 34. The lower side of the upper spacer ring 44 is bevelled in a similar manner. At its upper side, the upper spacer ring 44 is provided at the edge facing the shaft with a second bevel for the welded seam between gearwheel 13 and shaft 12.

The gear box, which for its proper operation is at least partly filled with a lubricant, is at its bottom side protected from leakage by a rubber O-ring 58 between bottom plate 39 and bearing housing 35 and by two oil sealing rings 60, 61. The rubber ring 58 is accommodated in a nick 59 in the central portion of the lower bearing housing 30 approximately halfway between the vertical connection between bottom plate 39 and boss 41 and the outer edge of the central portion 36 of the lower bearing housing 30. The upper oil sealing ring 60 is disposed above the bearing 34 between the spacer ring 44 and the bearing housing 30. The lower oil sealing ring 61 is disposed at the bottom side of the lock rings 43 between the boss 41 of the bearing housing and the lower spacer ring 53. A further oil seal of the box 4 is provided by a rubber strip disposed between the cover plate 73 and the trough-like portion of the box 4.

In the present embodiment, the washer 54 has, in a cross-sectional view, from the edge of a central aperture for the shaft 2 to the outside, a flat and approximately horizontally extending portion which bears on the carrier 27 and an obliquely upwardly extending portion having a width approximately equal to the flat portion. In the present embodiment, the angle of the oblique portion is approximately 30°. At the end of the washer, the oblique portion merges into an upright portion 62 whose edge is substantially contiguous to the bottom of the gear box 4. The washer 54 is preferably dimensioned such that the upright portion 62 extends to beyond the midway point of the distance between a vertical central line of the box 4 and the transverse end of the bottom plate 39. In the present embodiment, the upright portion 62 of the washer is arranged at approximately the same distance as the outer supports 46 of the bearing housing.

The washer 54 protects the boss 41 of the bearing housing 35 and the bottom plate 39 of the gear box from damage by stones. More specifically, stones can get caught between the carrier 27 of the tines and the bottom plate 39 of the gear box 4. The driving force is such that the carrier continues to rotate, as a result of which the boss 41 of the bearing housing can evidence fractures or cracks immediately or in the long run. This may ultimately result in a destruction of the supporting construction of working member 5 and gearwheel 13 and consequently also in damage of the relevant gearwheel 13 and the adjacent gearwheels 13. A further possibility is that the bottom plate 39 is dented. This may cause the accurate connection to the rubber O-ring 58 to be disturbed, so that oil leakage will occur, which ultimately is also fatal for the mutual drive and the bearing of the gearwheels 13.

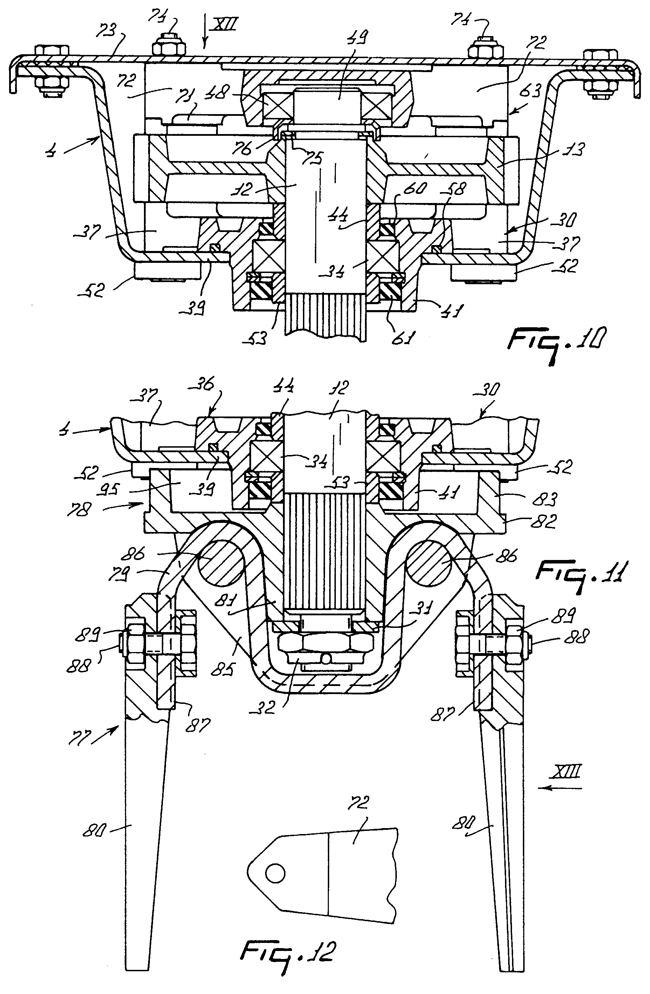

Further important functions of the washer 54 are to hold back dirt, to allow floating dust particles to settle and to render it difficult for dust and dirt to penetrate to as far as the oil seal ring 60. The space 64 between boss 41, bottom plate 39 and washer 54 has a function in reducing the speed of dust particles caused by whirlings produced by the working members 5. Near the interface between the flat portion and the obliquely upwardly extending portion, the washer 54 is provided with preferably more than one discharge aperture 65 (see Figure 10). The dust and dirt settled in the washer space 64 is removed by centrifugal force. A tight seal between the lower edge of the boss 41 and the washer 54 ensures that this dust settles still further near the oil seal ring, whilst the narrow upright edge near the interface between the thickened edge of the washer 54 and the inner wall of the boss 41 has for its effect that this dust and any possible dirt can only reach the oil seal ring 61 against the force of gravity. Deposited dust and dirt can be removed by centrifugal force from the space between the lower edge of the boss 41 and the washer 54.

A still further protection of the bearing construction from dust and dirt is obtained with the aid of a collar 66, which is tightly arranged about the upright portion of the washer 54 against the bottom plate 39 of the gear box. The collar 66 covers the narrow aperture between washer 54 and the bottom plate, so that passing earth and dust are halted in their motion and cannot penetrate via this aperture into the washer space 64. Penetration of the washer space 64 can now only occur against the force of gravity. Such a collar 66 has more particularly at the side which, relative to the direction of operative travel, is the leading side of the gear box 4 and more particularly in the region where the working members 5 at the leading side of the box 4 rotate towards each other, a function in counteracting wear of the bottom plate 39 of the gear box 4 due to the passing flow of earth. An advantageous embodiment of the machine is therefore already obtained when such a collar is provided in at least one of these locations.

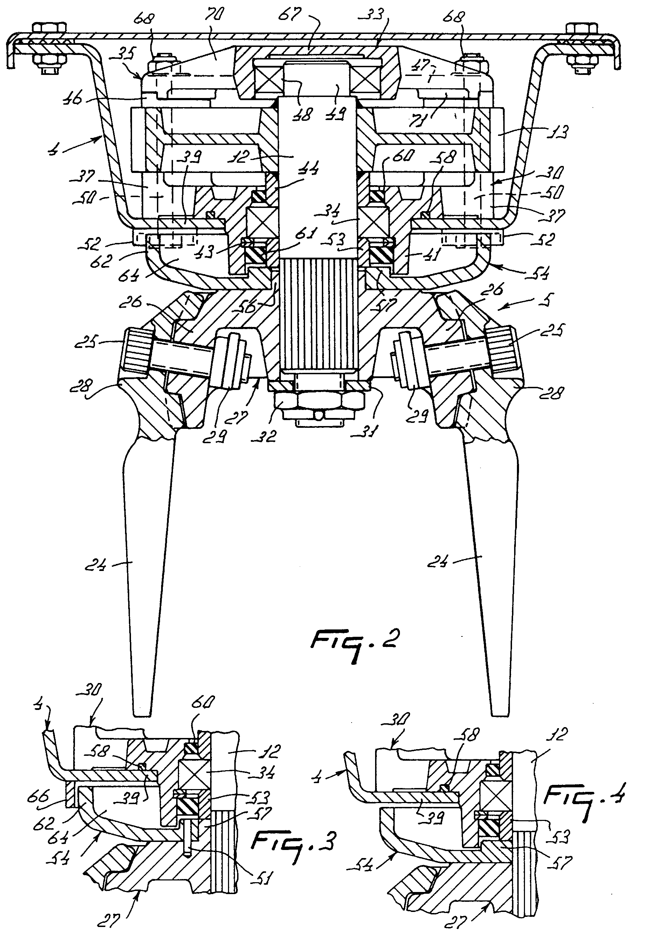

Figure 3 shows an embodiment of the machine according to the invention, in which the said collar 66 is provided around the washer 54. Independently of the collar 66, this embodiment has a construction in which the lower spacer ring 53 bears on the upright edge 56 of the carrier 27. To that end, this edge is of a more robust structure. In this embodiment, the washer is locked with the aid of a locking pin 51.

In a still further embodiment, shown in Figure 4, the thickened portion 57 of the washer 54 extends to as far as the periphery of the shaft 12 and the upper side of the carrier 27 is perfectly flat. The washer is here, as is also the case in the embodiment shown in Figure 2, clamped between the carrier 27 and the spacer ring 53.

As is shown in Figure 2, the bearing housing 35 provides a further support for the shaft 12 of a working member 5 in a location in the axial direction at some distance from the first bearing 34. In the present embodiment, the second part 33 of the bearing housing 35 bears on the upper edge of the upright portions 46 of the first part 30 of the bearing housing. As is also shown in Figure 8, this second part 33 of the bearing housing includes a central body 67 and, as has also the first bearing housing part 30, four protruding points 47 arranged in a star shape. The ends thereof are provided with a shoulder 71, inter alia for centring the second bearing housing part 47 on the first bearing housing part 37. The bearing housing parts 30, 33 are interconnected via bolts which are each passed through a bore in the bottom 39 of the box, the upright portion 46 of the first bearing housing 30 and the end of a protruding point 47 of the second bearing housing part and which inside the box 4 are fitted with a nut 68 which abuts against the second bearing housing either with or without an intermediate ring. The central portion 67 of the second bearing housing part includes, provided in its centre, a collar 69 whose height is at least similar to the height of the bearing 48 centred therein. This bearing 48 is disposed about a reduced end portion 49 of the shaft 12 of a working member 5. At the upper side of the collar 69 and above the shaft end, the second bearing housing part 33 is closed. This closure prevents splashing lubricant from the box 4 from finding its way through the second bearing 48, as the result thereof may be that the bearing 48 acts as a sieve for contaminations in the lubricant, which in the long run may have a detrimental effect on the bearing. At its exterior side, the collar 69 is supported by supporting edges 70 on the protruding points 47. These edges 70 also contribute to the stiffness of the protruding points 47.

Figure 10 shows in a further embodiment a second mode of connecting a bearing housing 63 formed from two parts. A second bearing housing part 72, which largely corresponds to the design 33 described hereinbefore, is near the ends of the protruding points of such a thickness that the upper surface thereof contacts the cover 73 of the gear box 4.

Figure 12 is a plan view of such a protruding point. The bearing housing is now not only connected to the bottom plate 39 of the gear box, but also to the top plate 73 or cover plate of the gear box 4 located opposite thereto. Connecting bolts 74 extend in this embodiment through two walls of the gear box 4 and are bolted to the upper side of the box 4.

Figure 10 also shows a second mode of fitting the gearwheel 13 on the shaft 12 of the working members 5. The gearwheel 13 is disposed via splines on the shaft 12 and bears on the upper spacer ring 44. In a nick in the shaft 12, above the gearwheel 13 and near the reduced portion 49 of the shaft 12, a locking ring 75 formed from two semicircular parts is accommodated. A ring 76 with a cover is provided about the reduced portion 49 of the shaft 12. The cover retains the two semicircular parts of the ring in the nick of the shaft 12.

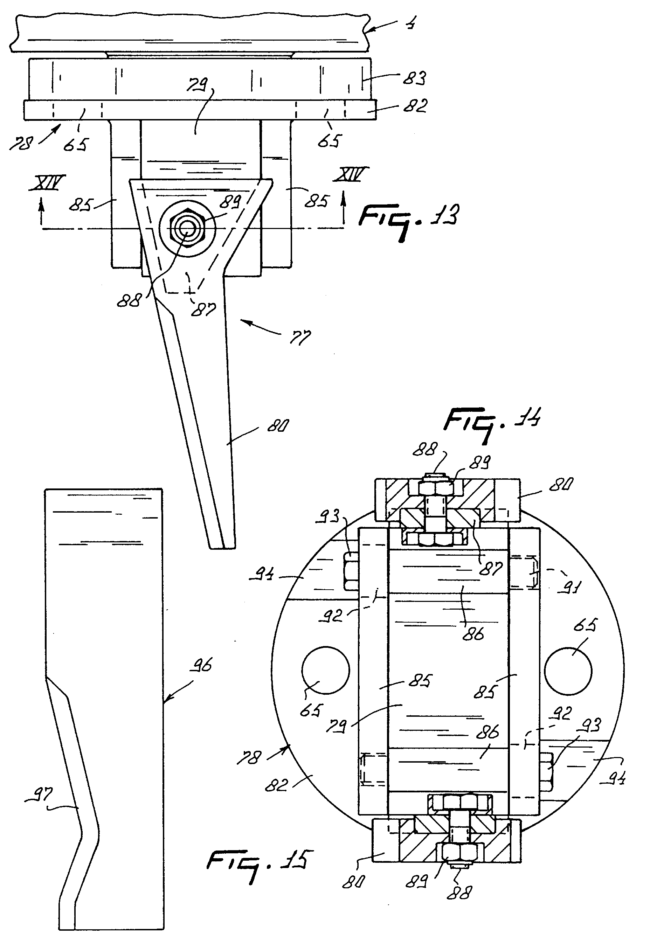

Figure 11 shows in yet a further embodiment a construction which contributes to a long operating life of the bearing-supported suspension of a working member 77. In this construction it is prevented that shocks occurring during working of the soil must be absorbed by the bearing 34, the bearing housing 35 and the gear box 4 only. The carrier 78 of this working member 77 contains in this embodiment a spring-steel holder 79, to a downwardly directed portion of which a tine 80 is fastened. The carrier 78 is connected in a manner already described to the shaft 12 via splines. A washer member 82 having a flat and an upwardly directed portion 83 is disposed on the upper side of a boss portion 81 of the carrier 78. Also in this case the upright portion 83 extends substantially to the bottom 39 of the gear box 4.

As is shown in Figure 13, there are disposed at a distance of approximately one quarter of the diameter of the washer, from its outer side, in a downward direction two plate-shaped extensions 85 of the carrier 78 in a parallel relationship. Between these plate-shaped extensions 85, the shaft 12 is located and two pins 86 extend at a square angle to the extensions 85 and in the horizontal direction, and that in such a manner that there is one pin on either side of the boss 81 of the carrier. The leaf-like holder 79 is curved around these pins. This holder has a width which is substantially equal to the spacing between the plate-shaped extensions 85 of the carrier 78. The plate-shaped holder 79 is clamped between a pin 86 and a fitting, arc-shaped recess in the carrier 78. In the cross-sectional view shown in Figure 11, the arc extends from the centre of a pin 86, and predominantly at the interior side thereof, through approximately 135° from a horizontal line. The holder 79, which may be a leaf spring, is in the shape of a U, which envelops the shaft of a working member 77. A tine 80 may, however, alternatively be provided via two separate leaf springs 79, which are not interconnected at the bottom side of the shaft 12. At the exterior side of a pin 86, a holder 79 extends laterally and downwardly at an angle of approximately 45°. At a slight distance below the pin 86, that is to say at a distance less than the diameter of, or as in the present case less than half the diameter of the relevant pin, the sloping portion merges via a bend into an at least predominantly vertically downwardly extending end portion 87. In a side view as shown in Figure 13, the vertical portion ends in a reduced portion which starts near the bend, in the present case such that an approximately trapezoidal shape is obtained. The tines 80 which are connected thereto, are provided with a similar and fitting recess. The tine is connected by applying this recess over the end portion 87 of the holder 79 and by a bolt 88 which is passed through a bore in the holder 79 and in the tine 80 and is secured at the exterior side by a nut 89. The tine 80 has at the exterior side also a recess for seating the nut 89 in a protected position.

The pins 86, by means of which the holders 79 are secured, have at their end a threaded portion 91 which is screwed into the plate-shaped extension 85 of the carrier. The other end of a pin has an embossed portion 92 which is accommodated with a tight fit in an aperture in the oppositely arranged plate-shaped extension 85. At the exterior side of this embossed portion 92, a bolt head 93 is provided for securing a pin. To accommodate a pin 86, the edge 83 on the washer member 82 is provided at one side with an inward bulge 94, in such a manner that a more or less closed space 95, already described hereinbefore, having a discharge aperture 65, remains.

The leading side of a tine 80, which in the upward direction approaches the shape of a knife, is, in a side view, located at an angle of at least 5°, preferably 8° or, as in the present embodiment, 12.5°.

In a still further embodiment, shown in Figure 15, the holder and tine form one integral whole. The leading side of this knife-like tine 96 has a cutting edge formed by two portions which are placed at an angle relative to each other, the arrangement being such that, in a side view, in the direction of operative travel, a hook-like leading side is obtained. This shape promotes crumbling of the earth. The first or uppermost portion of the cutting edge is located, in a side view, at an angle of 12.5° with the vertical, in a direction facing away from the direction of travel. The second portion extends downwardly at a more or less similar angle facing the direction of travel. Such a shape mitigates the disadvantage of the knife-like tine, which during a portion of the circular path it describes must be moved through the soil with its flat side in front. A further advantage of this shape is that roots cannot slide down along the oblique edge, but are taken along by the hook of the tine. This furnishes a higher degree of certainty that the roots in the soil will be cut.

## Claims

1. An agricultural machine (1), comprising a hollow frame beam gear box (4) with walls, in which a plurality of bearing housings (35) and a plurality of gear wheels (13) are present for driving working members (24) such as tines or knives, and in which the bearing housings (35) consist of two bearing housing parts (30, 33), accommodated at either side of the gear wheels (13), characterized in that in the gear box (4) a connection is provided between a bearing housing part (30) accommodated at one side of the gear wheel (13) and a bearing housing part (33) accommodated at the other side of the gear wheel (13) by which connection the bearing housing parts (30, 33) are mutually attached, thus realising a rigid position of the housing parts (30, 33) relative to each other without loading the walls of the gear box (4), and which bearing housing parts (30, 33) can be removed from each other in the axial direction.

2. An agricultural machine as claimed in claim 1, characterized in that at least one spacer member (46) attached to the bearing housing (35) formed by said interconnected bearing houses (30, 33) is clamped between two facing outer walls by means of a bolt (50).

3. An agricultural machine as claimed in any one of the preceding claims, characterized in that a bottom end (41) of the bearing housing (35) protrudes through the wall of the gear box (4), about which bottom end remote from this bottom end (41) there is present a circular edge (62) which is provided on the working member (5) and extends substantially to the wall of the gear box (4).

4. An agricultural machine as claimed in any one of the preceding claims, characterized in that a gear wheel (13) located between two bearings (30, 33) is welded to the shaft (12) associated with the working member (5), the knife or tine holder (27) being attached to the shaft via splines.

5. An agricultural machine as claimed in any one of the preceding claims, characterized in that the gear wheels (13) are arranged in a direction transversely to the direction of travel.

6. An agricultural machine as claimed in any one of the preceding claims, characterized in that the machine is a soil cultivating machine, more specifically a rotary harrow.

7. An agricultural machine as claimed in any one of the preceding claims, characterized in that the gear wheels (13) are spur gears and are rotatable about upwardly directed shafts (12).

8. An agricultural machine as claimed in any one of the preceding claims, characterized in that spaced apart walls (39, 73) are interconnected by means of one or a plurality of bolts (74).

9. An agricultural machine as claimed in any one of the preceding claims, characterized in that spacer members are present between the upper wall (73) and the lower wall (39).

10. An agricultural machine as claimed in any one of the preceding claims, characterized in that a bolt (50, 74) is passed through an aperture in a spacer member (46).

11. An agricultural machine as claimed in any one of the preceding claims, characterized in that in a plan view the bearing housing (35) has at least one protruding point, through which a bolt (50, 74) is passed.

12. An agricultural machine as claimed in claim 11, characterized in that a bearing housing has four fulcrum-like protrusions (37, 47).

13. An agricultural machine as claimed in any one of the preceding claims, characterized in that bolts extending through the lower wall and the upper wall are disposed along the periphery of a gear wheel.

14. An agricultural machine as claimed in any one of the preceding claims, characterized in that the bearing housings (35) in the gear box (4) are substantially contiguous to each other.

## Patentansprüche

1. Landwirtschaftliche Maschine (1) mit einem Kastenbalken-Getriebegehäuse (4) mit Wänden, in dem mehrere Lagergehäuse (35) und mehrere Zahnräder (13) zum Antreiben von Bearbeitungselementen (24) wie z. B. Zinken oder Messer angeordnet sind, wobei die Lagergehäuse (35) aus zwei Lagergehäuseteilen (30, 33) bestehen, die beiderseits der Zahnräder (13) angeordnet sind,
dadurch gekennzeichnet, daß innerhalb des Getriebegehäuses (4) zwischen einem auf der einen Seite des Zahnrades (13) angeordneten Lagergehäuseteil (30) und einem auf der anderen Seite des Zahnrades (13) angeordneten Lagergehäuseteil (33) eine Verbindung vorgesehen ist, durch die die Lagergehäuseteile (30, 33) derart miteinander verbunden sind, daß die Gehäuseteile (30, 33) relativ zueinander starr angeordnet sind, ohne die Wände des Getriebegehäuses (4) zu belasten, und in axialer Richtung voneinander zu lösen sind.

2. Landwirtschaftliche Maschine nach Anspruch 1,
dadurch gekennzeichnet, daß an dem Lagergehäuse (35) mindestens ein Distanzglied (46) zwischen zwei einander zugewandten Außenwänden mittels eines Bolzens (50) verspannt ist, wobei das Lagergehäuse durch die miteinander verbundenen Lagergehäuseteile (30, 33) gebildet ist.

3. Landwirtschaftliche Maschine nach einem der vorhergehenden Ansprüche,
dadurch gekennzeichnet, daß ein unteres Ende (41) des Lagergehäuses (35) aus der Wand des Getriebegehäuses (4) heraussteht und an dem unteren Ende in einem Abstand von diesem ein an dem Bearbeitungsglied (5) ausgebildeter Umfangsrand (62) liegt, der sich im wesentlichen in Richtung auf die Wand des Getriebegehäuses (4) erstreckt.

4. Landwirtschaftliche Maschine nach einem der vorhergehenden Ansprüche,
dadurch gekennzeichnet, daß ein zwischen zwei Lagern (30, 33) angeordnetes Zahnrad (13) an der Welle (12) des Bearbeitungsgliedes (5) angeschweißt ist, an der der Messer- oder Zinkenhalter (27) mittels Nuten befestigt ist.

5. Landwirtschaftliche Maschine nach einem der vorhergehenden Ansprüche,
dadurch gekennzeichnet, daß die Zahnräder (13) quer zur Arbeitsrichtung ausgerichtet sind.

6. Landwirtschaftliche Maschine nach einem der vorhergehenden Ansprüche,
dadurch gekennzeichnet, daß die Maschine eine Bodenbearbeitungsmaschine, insbesondere eine Kreiselegge ist.

7. Landwirtschaftliche Maschine nach einem der vorhergehenden Ansprüche,
dadurch gekennzeichnet, daß die Zahnräder (13) Stirnräder und um aufwärts gerichtete Wellen (12) drehbar sind.

8. Landwirtschaftliche Maschine nach einem der vorhergehenden Ansprüche,
dadurch gekennzeichnet, daß auf Abstand liegende Wände (39, 73) durch einen oder mehrere Bolzen (74) miteinander verbunden sind.

9. Landwirtschaftliche Maschine nach einem der vorhergehenden Ansprüche,
dadurch gekennzeichnet, daß zwischen der oberen Wand (73) und der unteren Wand (39) Distanzglieder angeordnet sind.

10. Landwirtschaftliche Maschine nach einem der vorhergehenden Ansprüche,
dadurch gekennzeichnet, daß durch eine Öffnung in einem Distanzglied (46) ein Bolzen (50, 74) hindurchgeführt ist.

11. Landwirtschaftliche Maschine nach einem der vorhergehenden Ansprüche,
dadurch gekennzeichnet, daß das Lagergehäuse (35) in Draufsicht mindestens einen Stützvorsprung aufweist, durch den ein Bolzen (50, 74) hindurchgeführt ist.

12. Landwirtschaftliche Maschine nach Anspruch 11,
dadurch gekennzeichnet, daß ein Lagergehäuse vier Stützvorsprünge (37, 47) aufweist.

13. Landwirtschaftliche Maschine nach einem der vorhergehenden Ansprüche,
dadurch gekennzeichnet, daß durch die untere und die obere Wand hindurchgeführte Bolzen entlang der Peripherie eines Zahnrades angeordnet sind.

14. Landwirtschaftliche Maschine nach einem der vorhergehenden Ansprüche,
dadurch gekennzeichnet, daß die Lagergehäuse (35) in dem Getriebegehäuse (4) im wesentlichen aneinander angrenzen.

## Revendications

1. Machine agricole (1) comprenant un boîtier d'engrenage (4) à poutre creuse de cadre, ayant des parois, dans laquelle une pluralité de boîtier de paliers (35) et une pluralité de roues dentées (13) sont installées afin d'entraîner des organes de travail (24), tels que des dents ou des lames, et dans laquelle les boîtiers de palier (35) consistent en deux parties de boîtier de palier (30, 33), logés de chaque côté des roues dentées (13), caractérisée en ce que, dans le boîtier d'engrenage (4), une liaison est prévue entre une partie de boîtier de palier (30) logée d'un côté de la roue dentée (13) et une partie de boîtier de palier (33) logé de l'autre côté de la roue dentée (13), liaison par laquelle les parties de boîtier de palier (30, 33) sont fixées entre elles, permettant ainsi d'obtenir une position rigide des parties de boîtier (30, 33) l'une par rapport à l'autre, sans charger les parois du boîtier d'engrenage (4), et les parties de boîtier de palier (30, 33) pouvant être retirées l'une de l'autre dans la direction axiale.

2. Machine agricole selon la revendication 1, caractérisée en ce que le au moins un organe d'espacement (46) fixé au boîtier de palier (35), formé par lesdits boîtiers de paliers (30, 33) reliés entre eux, est serré entre deux parois extérieures se faisant face, au moyen d'un boulon (50).

3. Machine agricole sel on l'une quelconque des revendications précédentes caractérisée en ce qu'une extrémité inférieure (41) du boîtier de palier (35) fait saillie de la paroi de boîtier d'engrenage (4), extrémité inférieure autour de laquelle, à distance de cette extrémité inférieure (41), se trouve un bord circulaire (62) qui est prévu sur l'organe de travail (5) et s'étend sensiblement vers la paroi du boîtier d'engrenage (4).

4. Machine agricole selon l'une quelconque des revendications précédentes caractérisée en ce qu'une roue dentée (13), disposée entre deux paliers (30, 33), est soudée à l'arbre (12) associé à l'organe de travail (5), à la lame ou au support de dent (27) fixé à l'arbre via des cannelures.

5. Machine agricole sel on l'une quelconque des revendications précédentes, caractérisée en ce que les roues dentées (13) sont agencées dans une direction transversale à la direction de déplacement.

6. Machine agricole selon l'une quelconque des revendications précédentes, caractérisée en ce que la machine est une machine de culture du sol, plus spécifiquement une herse rotative.

7. Machine agricole sel on l'une quelconque des revendications précédentes, caractérisée en ce que les roues dentées (13) sont des engrenages droits et peuvent tourner autour d'arbres (12) orientés vers le haut.

8. Machine agricole selon l'une quelconque des revendications précédentes, caractérisée en ce que des parois (39, 76) espacées l'une de l'autre sont reliées entre elles au moyen d'un ou plusieurs boulons (74).

9. Machine agricole selon l'une quelconque des revendications précédentes, caractérisée en ce que des organes d'espacement sont disposés entre la paroi supérieure (73) et la paroi inférieure (39).

10. Machine agricole selon l'une quelconque des revendications précédentes, caractérisée en ce qu'un boulon (50, 74) est passé par une ouverture ménagée dans un organe d'espacement (46).

11. Machine agricole selon l'une quelconque des revendications précédentes, caractérisée en ce que, dans une vue en plan, le boîtier de palier (35) présente au moins une pointe saillante, par laquelle est passée un boulon (50, 74).

12. Machine agricole selon la revendication 11, caractérisée en ce qu'un boîtier de palier présente quatre saillies (37, 47) en forme de points de pivot.

13. Machine agricole selon l'une quelconque des revendications précédentes, caractérisée en ce que des boulons traversant la paroi inférieure et la paroi supérieure sont disposés le long de la périphérie d'une roue dentée.

14. Machine agricole sel on l'une quelconque des revendications précédentes, caractérisée en ce que les boîtiers de paliers (35) disposés dans le boîtier d'engrenage (4) sont sensiblement contigus l'un par rapport à l'autre.
